# EUROPEAN PATENT SPECIFICATION

(11) **EP 2 879 213 B1**
(45) Date of publication and mention of the grant of the patent: **26.12.2018**
(21) Application number: 14827995.3
(22) Date of filing: 30.09.2014
(51) Int. Cl.: H01M 4/505, H01M 4/525, C01G 53/00, H01M 4/36, H01M 10/052

(54) **CATHODE ACTIVE MATERIAL FOR SECONDARY BATTERY AND METHOD FOR PREPARING SAME**
KATHODENAKTIVMATERIAL FÜR EINE SEKUNDÄRBATTERIE UND VERFAHREN ZUR HERSTELLUNG DAVON
MATÉRIAU ACTIF DE CATHODE POUR BATTERIE SECONDAIRE ET SON PROCÉDÉ DE PRÉPARATION

(30) Priority: 30.09.2013 KR 20130117035; 29.09.2014 KR 20140130376
(43) Date of publication of application: 03.06.2015
(73) Proprietor: LG Chem, Ltd., Seoul 150-721 (KR)
(72) Inventor: LEE, Dong Kwon, Daejeon 305-738 (KR); CHO, Seung Beom, Daejeon 305-738 (KR); NHO, Jun Seok, Daejeon 305-738 (KR); JANG, Wook, Daejeon 305-738 (KR)
(74) Representative: Goddar, Heinz J.
(86) International application number: PCT/KR2014/009192
(87) International publication number: WO 2015/047023

(56) References cited:
- EP-A1- 2 096 692
- WO-A1-2013/064779
- KR-A- 20110 017 253
- KR-A- 20120 021 674
- KR-B1- 100 366 058
- KR-B1- 100 813 014
- US-A1- 2009 004 563
- US-A1- 2013 149 227
- US-A1- 2013 149 616
- US-A1- 2013 236 788
- LIU W ET AL: "SYNTHESIS AND ELECTROCHEMICAL STUDIES OF SPINEL PHASE LIMN2O4 CATHODE MATERIALS PREPARED BY THE PECHINI PROCESS", JOURNAL OF THE ELECTROCHEMICAL SOCIETY, ELECTROCHEMICAL SOCIETY, vol. 143, no. 3, 1 March 1996 (1996-03-01) , pages 879-884, XP002032962, ISSN: 0013-4651

## Description

### TECHNICAL FIELD

The present invention relates to a method of manufacturing a cathode active material for a secondary battery the same, and more particularly, to a method of manufacturing a cathode active material including a metal oxide layer having a uniform thickness which is formed by using a metal glycolate solution.

### BACKGROUND ART

In line with the increasing use of mobile devices and vehicles, demand for secondary batteries as their energy sources has been rapidly increased. As the secondary batteries, lithium secondary batteries having high energy density, high voltage, long cycle life, and low self-discharging rate have been commercialized and widely used.

A lithium secondary battery may be largely composed of a cathode active material, an anode active material, a separator, and an electrolyte. Specifically, a carbon material has been used as a main component of the anode active material, and in addition, research into using lithium metal, a sulfur compound, a silicon compound, and a tin compound has been actively conducted. Also, a layered structure, lithium-containing cobalt oxide (LiCoO₂) has been mainly used as the cathode active material, and in addition, lithium metal compounds having a layered structure (the metal includes manganese, cobalt, nickel, etc.), lithium-containing manganese oxides having a spinel structure (LiMnO₂ and LiMn₂O₄), and lithium-containing nickel oxide (LiNiO₂) have been commercialized.

With respect to LiCoO₂ among the above cathode active materials, it has limitations in being applied to high-capacity batteries for electric vehicles due to the fact that it has low structural stability, has high raw material costs, and causes environmental pollution. With respect to a lithium manganese oxide, such as LiMnO₂ and LiMn₂O₄, studied as an alternative material of LiCoO₂, it is inexpensive, but has disadvantages in that electrical conductivity is low, capacity is low, and electrode degradation rapidly occurs at high temperature. Also, with respect to the lithium-containing nickel oxide, it has battery characteristics of high discharge capacity, but has disadvantages in that it is difficult to be synthesized by a simple solid-state reaction and its cycle characteristics are low.

Therefore, there is an urgent need to develop a novel cathode active material having excellent high-temperature stability, lower manufacturing costs, and excellent cycle characteristics.
KR 2011 0017253 A discloses a method for producing a positive active material, comprising the steps of: preparing and mixing Mn(CH₃COO)₂ aqueous solution and Ni(CH₃COO)₂ aqueous solution, introducing CH₃COOLi and citric acid into the resulting mixture solution and dissolving same, and then introducing ethylene glycol and stirring for an hour so as to prepare a sol; introducing LiMn₂O₄ into the prepared sol, stirring the sol at a temperature of 140°C to gel, drying same, and coating the surface of LiMn₂O₄ with the sol of lithium oxide; and heat-treating the LiMn₂O₄ coated with the lithium oxide.
KR 2012 0021674 A also discloses a method for producing a positive active material comprising a step for primarily heating a mixture solution so as to prepare a metal glycolate solution and a step for secondarily heating same.
US 2013/236788 A1 discloses a method for producing a positive active material for a lithium ion secondary battery, which comprises obtaining particles having an oxide of Zr locally distributed at the surface of a lithium-containing composite oxide from a composition obtained by dissolving a Zr-containing compound in a solvent, wherein the composition comprises a polyol solvent and a citric acid.

### DISCLOSURE OF THE INVENTION

### TECHNICAL PROBLEM

An aspect of the present invention provides a method of manufacturing a cathode active material which includes a metal oxide coating layer formed by using a metal glycolate solution.

Provided is a cathode active material coated with a metal oxide layer which is manufactured by the above method.

Provided is a secondary battery in which cycle characteristics are improved by including the cathode active material coated with a metal oxide layer.

### TECHNICAL SOLUTION

According to an aspect of the present invention, there is provided a method of manufacturing a cathode active material that comprises a metal composite oxide coating layer, the method comprising steps of:
a first step of preparing a metal glycolate solution;
a second step of mixing lithium-containing transition metal oxide particles and the metal glycolate solution and stirring in a paste state;
a third step of drying the paste-state mixture; and
a fourth step of performing a heat treatment on the dried mixture,
wherein the metal glycolate solution comprises a single material selected from the group consisting of aluminum glycolate, zirconium glycolate, titanium glycolate, calcium glycolate, and manganese glycolate, or a mixture of two or more thereof, and
wherein the metal composite oxide coating layer comprises at least one compound selected from the group consisting of metal organo-compounds represented by Chemical Formulae 1 to 3:

[Chemical Formula 1] M(C₂H₅O₂)ₙ

[Chemical Formula 2] M(C₆H₍₈₋ₙ₎O₇)

[Chemical Formula 3] M(C₆H₍₈₋ₙ₎O₇) (C₂H₅O₂)

(where M, as a metal desorbed from a metal precursor, represents at least one metal selected from the group consisting of calcium (Ca), titanium (Ti), zirconium (Zr), manganese (Mn), and aluminum (Al), and n is an integer between 1 and 4), wherein, after the heat treatment, the metal composite oxide coating layer comprises at least one compound obtained by heat treatment of materials selected from the group consisting of metal organo-compounds represented by chemical formulae 1 to 3.
Further embodiments are disclosed in the dependent claims.

In particular, in the present invention, the metal glycolate solution may be prepared by a method which includes preparing a mixed solution by dispersing a metal precursor and a chelating agent in a glycol-based solvent; performing primary heating on the mixed solution; and performing secondary heating on the mixed solution.

There is provided a cathode active material, which is manufactured by the above method, including: lithium-containing transition metal oxide particles; and a metal oxide layer coated on surfaces of the lithium-containing transition metal oxide particles.

There is provided a cathode for a secondary battery including: a cathode collector; and the cathode active material of the present invention coated on the cathode collector.

There is provided a lithium secondary battery including: the cathode of the present invention; an anode; a separator disposed between the cathode and the anode; and a lithium salt-containing non-aqueous electrolyte solution.

### ADVANTAGEOUS EFFECTS

In the present invention, a metal oxide layer having a uniform thickness may be formed on the surface of a cathode active material by using a metal glycolate solution. Also, a cathode having improved charge and discharge efficiency and a secondary battery having improved cycle characteristics may be prepared by including the cathode active material coated with a metal oxide.

### BRIEF DESCRIPTION OF THE DRAWINGS

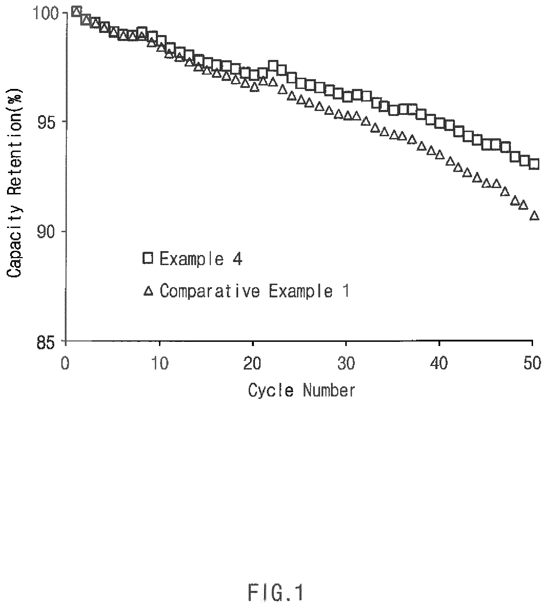

FIG. 1 is a graph comparing cycle characteristics of secondary batteries according to Experimental Example 1 of the present invention.

### MODE FOR CARRYING OUT THE INVENTION

Hereinafter, the present invention will be described in detail.

Recently, the need for using a cathode of a lithium ion secondary battery at a high voltage increases, and accordingly, research into methods for preparing a cathode active material having excellent high-temperature stability, low manufacturing costs, excellent capacity, and excellent cycle characteristics has emerged. For example, in order to improve thermal stability and cycle characteristics, a method of coating the surface of a cathode active material with a metal oxide using a typical dry or wet coating method has been proposed. However, since it is difficult to coat the metal oxide to have a uniform thickness by the typical method, the degree of improvement is still insufficient. For example, the dry coating method has advantages in that the process is simple and cost is low, but has disadvantages in that it is difficult to form a metal oxide coating layer having a uniform thickness on the surface of a cathode active material. The wet coating method may form a metal oxide coating layer having a uniform thickness. However, the wet coating method has disadvantages in that anions capable of degrading battery characteristics may not only remain on the surface of the metal oxide coating layer, but it may also be difficult to coat a metal oxide layer having a uniform thickness to further improve charge and discharge efficiency.

Accordingly, the present invention aims at providing a method of manufacturing a cathode active material for a secondary battery which may form a metal oxide coating layer to have a uniform thickness.

Specifically, according to an embodiment of the present invention, provided is a method of manufacturing a cathode active material that comprises a metal composite oxide coating layer, the method comprising steps of:
a first step of preparing a metal glycolate solution;
a second step of mixing lithium-containing transition metal oxide particles and the metal glycolate solution and stirring in a paste state;
a third step of drying the paste-state mixture; and
a fourth step of performing a heat treatment on the dried mixture,
wherein the metal glycolate solution comprises a single material selected from the group consisting of aluminum glycolate, zirconium glycolate, titanium glycolate, calcium glycolate, and manganese glycolate, or a mixture of two or more thereof, and
wherein the metal composite oxide coating layer comprises at least one compound selected from the group consisting of metal organo-compounds represented by Chemical Formulae 1 to 3:

[Chemical Formula 1] M(C₂H₅O₂)ₙ

[Chemical Formula 2] M(C₆H₍₈₋ₙ₎O₇)

[Chemical Formula 3] M(C₆H₍₈₋ₙ₎O₇)(C₂H₅O₂)

(where M, as a metal desorbed from a metal precursor, represents at least one metal selected from the group consisting of calcium (Ca), titanium (Ti), zirconium (Zr), manganese (Mn), and aluminum (Al), and n is an integer between 1 and 4), wherein, after the heat treatment, the metal composite oxide coating layer comprises at least one compound obtained by heat treatment of materials selected from the group consisting of metal organo-compounds represented by chemical formulae 1 to 3.

First, in the method of the present invention, the first step of preparing a metal glycolate solution may include preparing a mixed solution by dispersing a metal precursor and a chelating agent in a glycol-based solvent; performing primary heating on the mixed solution; and performing secondary heating on the mixed solution.

During the preparation of the metal glycolate solution (the first step), the glycol-based solvent is a component added to function as a reactant which forms a metal organo-compound by combining (reacting) with a metal desorbed from the metal precursor during a heating process. Typical examples of the glycol-based solvent may include solvents having a boiling point (bp) of 120°C to 400°C, for example, a single material selected from the group consisting of ethylene glycol (bp 197°C), propylene glycol (bp 188°C), diethylene glycol (bp 245°C), triethylene glycol (bp 285°C), and polyethylene glycol, or a mixture of two or more thereof, but the present invention is not particularly limited thereto. In the case that a solvent having a boiling point of less than 120°C is used as the glycol-based solvent, since the binding reaction with the metal desorbed from the metal precursor does not occur, the metal organo-compound may be difficult to be formed.

Also, during the preparation of the metal glycolate solution (the first step), the metal precursor is not particularly limited so long as it includes a typical metal, and for example, the metal precursor may include a single material selected form the group consisting of acetate, hydroxide, nitrate, nitride, sulfate, sulfide, alkoxide, and halide, which include at least one metal selected form the group consisting of calcium (Ca), titanium (Ti), zirconium (Zr), manganese (Mn and aluminum (Al), or a mixture of two or more thereof. Specifically, typical examples of the metal precursor may be aluminum acetate, zirconium nitride, or manganese acetate.

Furthermore, during the preparation of the metal glycolate solution (the first step), the chelating agent is a component added to facilitate the binding between the glycol-based solvent and the metal by more easily desorbing the metal from the metal precursor, and typical examples of the chelating agent may include a single material selected from the group consisting of citric acid, ethylenediaminetetraacetic acid (EDTA), oxalic acid, and gluconic acid, or a mixture of two or more thereof.

During the preparation of the metal glycolate solution, a content ratio (parts by weight) of the metal precursor: the glycol-based solvent: the chelating agent may be in a range of 1:1:0.1 to 1:500:20, for example, 1:1:0.1 to 1:100:20.

In the case that the amount of the glycol-based solvent is less than 1 part by weight, the metal desorbed from the metal precursor may not entirely react with the glycol-based solvent to remain in a state of the metal precursor. Also, in the case in which the amount of the glycol-based solvent is greater than 500 parts by weight, since a large amount of the unnecessary glycol-based solvent must be removed by being evaporated during the secondary heating reaction, the consumption of energy and the glycol-based solvent may be large. Furthermore, in the case that the amount of the chelating agent is less than 0.1 parts by weight, the effect of the chelating agent may not be sufficiently obtained. In the case in which the amount of the chelating agent is greater than 20 parts by weight, since a large amount of the chelating agent preferentially reacts with the metal precursor to inhibit the reaction between the glycol-based solvent and the metal precursor, a desired yield of the metal organo-compound may be reduced.

During the preparation of the metal glycolate solution (the first step), an additive may be further included. The additive may improve the yield of metal oxide by being included as a catalyst component which promotes the reaction between the metal desorbed from the metal precursor and the glycol-based solvent. The additive may be a component which does not remain later in a coating layer by being entirely evaporated and removed during the heating. Typical examples of the additive may include a single material selected from the group consisting of formaldehyde, acetaldehyde, and glycolic acid, or a mixture of two or more thereof.

The additive may be included in an amount of 0.1 parts by weight to 20 parts by weight based on total 1 part by weight of the metal precursor. In the case that the amount of the additive is greater than 20 parts by weight, there may be a possibility that a large amount of byproducts may be formed due to the occurrence of side reactions.

Also, during the preparation of the metal glycolate solution (the first step), the primary heating may be performed at a temperature below a boiling point of the glycol-based solvent, as a temperature at which the reaction is initiated, to a temperature above the boiling point. Specifically, the primary heating may be performed in a temperature range of 100°C to 300°C, for example, 110°C to 230°C, for 1 hour to 48 hours, for example, 5 hours to 20 hours. The primary heating may be performed in which a time at which all metal of the metal precursor react with the glycol-based solvent to form the metal organo-compound is set as a termination point.

A viscosity of the mixed solution after the primary heating may be in a range of about 0.001 kg/m•s (1 cps) (centipoise) to about 1 kg/m•s (1,000 cps), and specifically, the mixed solution may have a viscosity similar to the glycol-based solvent.

Furthermore, during the preparation of the metal glycolate solution (the first step), the secondary heating may be immediately performed with no time interval, such as a cooling process, after the primary heating. In this case, the secondary heating may be performed at a temperature near the boiling point of the glycol-based solvent or thereabove. Specifically, the secondary heating may be performed in a temperature range of 100°C to 300°C, for example, 170°C to 250°C, for 1 hour to 5 hours. For example, in the case that ethylene glycol is used as the glycol-based solvent, the secondary heating may be performed at a temperature of about 180°C or more for 1 hour to 5 hours.

The secondary heating may be performed until a termination point at which the glycol-based solvent used as a reactant is sufficiently removed to form a metal glycolate solution. Thus, the secondary heating may be referred to as "heating and concentrating". In this case, the metal glycolate solution may have a viscosity of 0.001 kg/m•s (1 cps) to 15 kg/m•s (15,000 cps), specifically, 0.2 to 5 kg/m•s (200 cps to 5,000 cps), for example, 1 to 3 kg/m•s (1,000 cps to 3,000 cps).

During the preparation of the metal glycolate solution (the first step), the primary heating and the secondary heating may be performed in an inert gas atmosphere such as argon (Ar).

In the case that the metal glycolate solution is prepared by the performing of the secondary heating, a concentration of the coating solution may be easily adjusted during the preparation of the cathode active material including the metal coating layer, and thus, the effectiveness of coating may be improved by controlling coating conditions according to the concentration of the coating solution.

In the present invention, a glycol-based solvent (e.g., ethylene glycol), a metal precursor, and a chelating agent (e.g., citric acid) are mixed to prepare a mixed solution, and coordination bonds are then formed between oxygen of the glycol-based solvent and the chelating agent and metal ions desorbed from the metal precursor as follow while hydrogen of the glycol-based solvent and the chelating agent is desorbed during heating (concentrating) the mixed solution. As a result, a metal glycolate coating solution including a metal organo-compound as a main component is obtained while a metal desorbed from the metal precursor, the glycol-based solvent, and the chelating agent are combined together.

The metal glycolate solution prepared by the above method includes a single material selected from the group consisting of aluminum glycolate, zirconium glycolate, titanium glycolate, calcium glycolate, and manganese glycolate, or a mixture of two or more thereof.

Also, in the method of manufacturing a cathode active material of the present invention, the lithium-containing transition metal oxide (the second step) is not particularly limited so long as it is a typical lithium-containing transition metal oxide for a cathode active material, and for example, may include one selected from the group consisting of LiMO₂ (M=Co, Mn, Ni, Ni_{1/3}Co_{1/3}Mn_{1/3}, Cr, or V), LiMO₄ (M = CoMn, NiV, CoV, CoP, FeP, MnP, NiP, or Mn₂), Li(NiₐCo_{b}Mn_{c})O₂ (0<a<1, 0<b<1, 0<c<1, a+b+c=1), LiNi_{1-y}CO_{y}O₂, LiCo_{1-y}Mn_{y}O₂, LiNi_{1-y}Mn_{y}O₂ (O≤y≤1), Li(NiₐMn_{b}Co_{c})O₄ (0<a<2, 0<b<2, 0<c<2, a+b+c=2), LiMn_{2-z}Ni_{z}O₄, LiMn_{2-z}Co_{z}O₄ (O<z<2), and LiV₃O₆.

Specifically, typical examples of the lithium-containing transition metal oxide may be LiCoO₂, LiNiO₂, LiMnO₂, LiCuO₂, LiMn₂O₄, LiNi_{1/3}Mn_{1/3}Co_{1/3}O₂, LiCoPO₄, or LiFePO₄.

Also, in the method of manufacturing a cathode active material of the present invention, the mixing of the lithium-containing transition metal oxide particles and the metal glycolate solution and the stirring in a paste state (the second step) may be performed at a revolution speed of 500 rpm to 2,000 rpm and a rotation speed of 500 rpm to 2,000 rpm, specifically, at a revolution speed of 1,500 rpm and a rotation speed of 1,500 rpm using a paste mixer.

Furthermore, the drying of the paste-state mixture (the third step), as a step performed for evaporating a solvent in the paste-state mixture, may be performed in a temperature range of 100°C to 200°C, specifically, at a temperature of 180°C for 1 hour to 4 hours, for example, 2 hours.

Subsequently, in the method of manufacturing a cathode active material of the present invention, the heat treatment (the fourth step) may be performed in a temperature range of about 200°C to about 1,200°C, specifically, 300°C to 800°C, for 1 hour to 24 hours, for example, 1 hour to 10 hours in an air (oxidation) atmosphere.

In the case that the heat treatment temperature is greater than 1,200°C, a phenomenon may occur in which oxygen present in the lithium-containing transition metal oxide constituting the cathode active material is desorbed in a gaseous form, and in the case in which the heat treatment temperature is equal to or less than 200°C, a uniform metal oxide coating layer may not be formed.

After the performing of the heat treatment (the fourth step), a metal oxide layer derived from the metal glycolate solution is formed to a uniform thickness on the surface of the lithium-containing transition metal oxide. That is, an oxide layer of the same metal may be formed on the surface of the cathode active material according to the type of the metal glycolate solution. The metal oxide layer coated on the surface of the cathode active material after the heat treatment (the fourth step) includes an oxide layer of at least one metal selected from the group consisting of Ca, Ti, Zr, Mn, and Al.

As described above, in the method of the present invention, the metal glycolate solution and the lithium-containing transition metal oxide particles are mixed in a paste state and then heat-treated. Thus, the surface of the lithium-containing transition metal oxide, for example, the surface of the cathode active material, of the secondary battery may be coated with a metal oxide layer having a uniform thickness. Furthermore, since a uniform carbon coating layer may be further formed on the surface of the cathode active material without additional supply of a carbon source as a subsequent process, a cathode active material having improved thermal stability, capacity characteristics, and cycle characteristics and a secondary battery including the cathode active material may be manufactured.

That is, since the metal oxide layer may act as an electrical resistance layer exhibiting significant internal resistance during high-rate discharge, such as a short circuit during the operation of the secondary battery, to obstruct the introduction of electrons into a lithium-containing transition metal oxide core, the metal oxide layer may also suppress the intercalation of lithium ions. That is, since the metal oxide layer may decrease the rate at which a large amount of lithium ions and electrons released from an anode during internal short circuit is intercalated into the cathode active material, the metal oxide layer may prevent the generation of heat due to the generation of instantaneous overcurrent and may improve the stability of the battery. If only a portion of the surface of the lithium-containing transition metal oxide is coated with the metal oxide, lithium ions and electrons may be intercalated into the lithium-containing transition metal oxide through a portion which is not coated with the metal oxide. Thus, the above-described effect, such as the decrease in the movement speed of lithium ions and electrons, may not be obtained, but an area through which lithium ions and electrons pass may also be decreased to further increase the local movement speed of the lithium ions and electrons due to a nozzle effect. Thus, the metal oxide layer may adversely affect the stability of the battery by promoting the local generation of heat. However, according to the present invention, since the surface of the lithium-containing transition metal oxide is uniformly coated with a metal oxide, the flow of lithium ions may be suppressed by maximizing the action of the metal oxide layer as a resistor when the overcurrent flows. In particular, the cathode active material of the present invention including the lithium-containing transition metal oxide coated with a metal oxide may decrease the surface energy of the lithium-containing transition metal oxide to change into a stable state, and thus, thermal stability may be improved by suppressing side reactions between the lithium-containing transition metal oxide and an electrolyte solution.

Provided is a cathode active material, which is manufactured by the above method, including lithium-containing transition metal oxide particles and a metal oxide layer coated on surfaces of the lithium-containing transition metal oxide particles.

In this case, the metal oxide layer may include at least one compound selected from the group consisting of compounds represented by the following Chemical Formulae 1 to 3 in which a metal desorbed from a metal precursor, a glycol-based solvent, and a chelating agent are combined.

[Chemical Formula 1] M(C₂H₅O₂)n

[Chemical Formula 2] M(C₆H₍₈₋ₙ₎O₇)

[Chemical Formula 3] M(C₆H₍₈₋ₙ₎O₇)(C₂H₅O₂)

(where M, as the metal desorbed from the metal precursor, represents at least one metal selected from the group consisting of Ca, Ti, Zr, Mn, and Al and n is an integer between 1 and 4.)

A thickness of the metal oxide layer may be in a range of 5 nm to 500 nm. In the case that the thickness of the metal oxide layer is less than 5 nm, an effect of protecting a cathode material may be reduced. In the case in which the thickness of the metal oxide layer is greater than 500 nm, since the metal oxide layer may obstruct lithium-ion movement, battery capacity and output may be reduced.

Also, an amount of metal in the metal oxide layer may be in a range of 0.01 wt% to 10 wt% based on a total weight of the lithium-containing transition metal oxide. In the case that the amount of the metal in the metal oxide layer is less than 0.01 wt%, the protective effect due to the coating may be reduced. In the case in which the amount of the metal in the metal oxide layer is greater than 10 wt%, since an excessive amount of the metal is coated, the metal oxide layer may adversely affect the capacity and output of the battery.

It may be desirable for the metal oxide layer to be in the form of being coated on the surface of the cathode active material. However, the metal oxide layer may also be formed to have a concentration gradient from the center of the cathode active material particle to the outer surface thereof because the inside of the cathode active material particle may be doped with the metal.

Also, provided is a cathode for a secondary battery including a cathode collector and the cathode active material of the present invention coated on the cathode collector.

In this case, the cathode collector is generally fabricated to have a thickness of about 3 µm to about 500 µm. The cathode collector is not particularly limited so long as it has high conductivity without causing adverse chemical changes in the batteries. The cathode collector may be formed of, for example, stainless steel, aluminum, nickel, titanium, fired carbon, or aluminum or stainless steel that is surface-treated with one of carbon, nickel, titanium, silver, or the like. The collector may have an uneven surface to improve the bonding strength of a cathode active material and may have any of various shapes such as that of a film, a sheet, a foil, a net, a porous body, a foam body, a non-woven fabric body, and the like.

Also, the cathode active material may further include a binder and a conductive agent in addition to the cathode active material coated with a metal oxide layer of the present invention.

The binder is a component that assists in the binding between the active material and the conductive agent and in the binding with the collector. The binder is commonly added in an amount of 1 wt% to 30 wt% based on a total weight of a mixture including the cathode active material. Examples of the binder may include polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene terpolymer (EPDM), a sulfonated EPDM, a styrene butadiene rubber, a fluoro rubber, various copolymers, and the like.

Also, the conductive agent is commonly added in an amount of 1 wt% to 30 wt% based on the total weight of the mixture including the cathode active material. Any conductive agent may be used without particular limitation so long as it has suitable conductivity without causing adverse chemical changes in the batteries. For example, the conductive agent may include a conductive material such as: graphite such as natural graphite and artificial graphite; carbon black such as acetylene black, Ketjen black, channel black, furnace black, lamp black, and thermal black; conductive fibers such as carbon fibers and metal fibers; metal powder such as fluorocarbon powder, aluminum powder, and nickel powder; conductive whiskers such as zinc oxide whiskers and potassium titanate whiskers; conductive oxide such as titanium oxide; or polyphenylene derivatives.

Also, a lithium secondary battery composed of the cathode including the cathode active material, an anode, a separator, and a lithium salt-containing non-aqueous electrolyte solution is provided.

The anode, for example, is prepared by coating an anode collector with an anode material including an anode active material and then drying the anode collector. If necessary, components, such as the conductive agent, the binder, and a filler, may be included in the anode material.

The anode collector is generally fabricated to have a thickness of about 3 µm to about 500 µm. The anode collector is not particularly limited so long as it has conductivity without causing adverse chemical changes in the batteries. The anode collector may be formed of, for example, copper, stainless steel, aluminum, nickel, titanium, fired carbon, copper or stainless steel that is surface-treated with one of carbon, nickel, titanium, silver, or the like, an aluminum-cadmium alloy, or the like. Also, like the cathode collector, the anode collector may have a fine roughness surface to improve bonding strength with an anode active material. The anode collector may have various shapes such as a film, a sheet, a foil, a net, a porous body, a foam body, a non-woven fabric body, and the like.

The separator is disposed between the cathode and the anode, and a thin insulating film having high ion permeability and mechanical strength is used. The separator typically has a pore diameter of 0.01 µm to 10 µm and a thickness of 5 µm to 300 µm.

For example, sheets or non-woven fabrics formed of an olefin-based polymer such as polypropylene; glass fibers or polyethylene, which have chemical resistance and hydrophobicity, are used as the separator. When a solid electrolyte, such as a polymer, is used as an electrolyte, the solid electrolyte may also serve as the separator.

The lithium salt-containing non-aqueous electrolyte solution is formed of an electrolyte and a lithium salt, and a non-aqueous organic solvent or an organic solid electrolyte may be used as the electrolyte solution.

Examples of the non-aqueous organic solvent may include aprotic organic solvents, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydroxyfuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Examples of the organic solid electrolyte may include a polyethylene derivative, a polyethylene oxide derivative, a polypropylene oxide derivative, a phosphate ester polymer, poly agitation lysine, polyester sulfide, polyvinyl alcohol, polyvinylidene fluoride, and a polymer containing an ionic dissociation group.

The lithium salt is a material that is readily soluble in the non-aqueous electrolyte and for example, may include LiCl, LiBr, LiI, LiClO₄, LiBF₄, LiB₁₀Cl₁₁, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate and imide.

Also, in order to improve charge/discharge characteristics and flame retardancy, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, and aluminum trichloride, for example, may be added to the electrolyte solution. In some cases, halogen-containing solvents, such as carbon tetrachloride and ethylene trifluoride, may be further included in order to impart incombustibility, and carbon dioxide gas may be further included in order to improve high-temperature storage characteristics.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### Examples

### (Preparation Example 1. Preparation of Metal Glycolate Solution)

40 g of zirconium nitride (ZrN) and 10 g of citric acid (C₆H₈O₇) were dispersed in 200 g of an ethylene glycol (C₂H₆O₂) solution and then stirred to prepare a mixed solution. The mixed solution was heated with stirring at a temperature of 150°C for 5 hours, and then heated and concentrated at a temperature of 180°C for 1 hour to prepare a zirconium glycolate solution.

### (Preparation Example 2. Preparation of Metal Glycolate Solution)

30 g of titanium isopropoxide (Ti(OCH(CH₃)₂)₄) and 10 g of citric acid (C₆H₈O₇) were dispersed in 200 g of an ethylene glycol (C₂H₆O₂) solution and then stirred to prepare a mixed solution. The mixed solution was heated with stirring at a temperature of 150°C for 5 hours, and then heated and concentrated at a temperature of 180°C for 1 hour to prepare a titanium glycolate solution.

### (Preparation Example 3. Preparation of Metal Glycolate Solution)

20 g of aluminum acetate (Al(C₂H₃O₂)₃) and 20 g of citric acid (C₆H₈O₇) were dispersed in 200 g of an ethylene glycol (C₂H₆O₂) solution and then stirred to prepare a mixed solution. The mixed solution was heated with stirring at a temperature of 150°C for 5 hours, and then heated and concentrated at a temperature of 180°C for 1 hour to prepare an aluminum glycolate solution.

### (Example 1. Preparation of Cathode Active Material)

While adding 2 g of the zirconium glycolate solution of Preparation Example 1 to 8 g of ethanol and stirring, LiNi_{0.6}Mn_{0.2}Co_{0.2}O₂ was added thereto and stirred in a paste state. The stirred paste was dried at 180°C for 2 hours and then heat-treated at 800°C in air for 1 hour to prepare cathode active material particles coated with about 0.2 wt% of zirconium oxide.

### (Example 2. Preparation of Cathode Active Material)

While adding 2 g of the titanium glycolate solution of Preparation Example 2 to 8 g of ethanol and stirring, LiNi_{0.6}Mn_{0.2}Co_{0.2}O₂ was added thereto and stirred in a paste state. The stirred paste was dried at 180°C for 2 hours and then heat-treated at 800°C in air for 1 hour to prepare cathode active material particles coated with about 0.2 wt% of titanium oxide.

### (Example 3. Preparation of Cathode Active Material)

While adding 1 g of the aluminum glycolate solution of Preparation Example 3 to 8 g of ethanol and stirring, LiNi_{0.6}Mn_{0.2}Co_{0.2}O₂ was added thereto and stirred in a paste state. The stirred paste was dried at 180°C for 2 hours and then heat-treated at 800°C in air for 1 hour to prepare cathode active material particles coated with about 0.2 wt% of aluminum oxide.

### (Example 4. Preparation of Secondary Battery)

A slurry was prepared by adding 90 wt% of the cathode active material particles of Example 3, 6 wt% of carbon black as a conductive agent, and 4 wt% of polyvinylidene fluoride (PVDF) as a binder to N-methyl-pyrrolidone (NMP). An aluminum (Al) foil as a cathode collector was coated with the slurry, and the coated Al foil was then rolled and dried to prepare a cathode for a lithium secondary battery.

A porous polyethylene separator was disposed between the cathode and a graphite-based anode, and a lithium salt-containing electrolyte solution was injected to prepare a cell.

### (Comparative Example 1)

A slurry was prepared by adding 90 wt% of LiNi_{0.6}Mn_{0.2}Co_{0.2}O₂ as a cathode active material, 6 wt% of carbon black as a conductive agent, and 4 wt% of PVDF as a binder to NMP. An Al foil as a cathode collector was coated with the slurry, and the coated Al foil was then rolled and dried to prepare a cathode for a lithium secondary battery in which a metal coating layer was not formed.

A porous polyethylene separator was disposed between the cathode and a graphite-based anode, and a lithium salt-containing electrolyte solution was injected to prepare a secondary battery cell.

### (Experimental Example 1. Cycle Life Characteristics Measurement)

Cycle life characteristics of the secondary battery of Example 4 and the secondary battery of Comparative Example 1 were measured. Referring to FIG. 1, it may be confirmed that cycle life of the secondary battery of Example 4 including the cathode of Example 3 was improved in comparison to that of the secondary battery of Comparative Example Example 1.

## Claims

1. A method of manufacturing a cathode active material that comprises a metal composite oxide coating layer, the method comprising steps of:
a first step of preparing a metal glycolate solution;
a second step of mixing lithium-containing transition metal oxide particles and the metal glycolate solution and stirring in a paste state;
a third step of drying the paste-state mixture; and
a fourth step of performing a heat treatment on the dried mixture,
wherein the metal glycolate solution comprises a single material selected from the group consisting of aluminum glycolate, zirconium glycolate, titanium glycolate, calcium glycolate, and manganese glycolate, or a mixture of two or more thereof, and
wherein the metal composite oxide coating layer comprises at least one compound selected from the group consisting of metal organo-compounds represented by Chemical Formulae 1 to 3:
[Chemical Formula 1] M(C₂H₅O₂)ₙ
[Chemical Formula 2] M(C₆H₍₈₋ₙ₎O₇)
[Chemical Formula 3] M(C₆H₍₈₋ₙ₎O₇) (C₂H₅O₂)
(where M, as a metal desorbed from a metal precursor, represents at least one metal selected from the group consisting of calcium (Ca), titanium (Ti), zirconium (Zr), manganese (Mn), and aluminum (Al), and n is an integer between 1 and 4), wherein, after the heat treatment, the metal composite oxide coating layer comprises at least one compound obtained by heat treatment of materials selected from the group consisting of metal organo-compounds represented by chemical formulae 1 to 3.

2. The method of claim 1, wherein the first step of preparing a metal glycolate solution comprises:
preparing a mixed solution by dispersing a metal precursor and a chelating agent in a glycol-based solvent;
performing primary heating on the mixed solution; and
performing secondary heating on the mixed solution,
wherein temperature of the performing primary heating on the mixed solution is different from temperature of the performing secondary heating on the mixed solution.

3. The method of claim 2, wherein the glycol-based solvent comprises a single material selected from the group consisting of ethylene glycol, propylene glycol, diethylene glycol, triethylene glycol, and polyethylene glycol, or a mixture of two or more thereof.

4. The method of claim 2, wherein the metal precursor comprises a single material selected form the group consisting of acetate, hydroxide, nitrate, nitride, sulfate, sulfide, alkoxide, and halide, which include at least one metal selected form the group consisting of calcium (Ca), titanium (Ti), zirconium (Zr), manganese (Mn), and aluminum (Al), or a mixture of two or more thereof.

5. The method of claim 2, wherein the chelating agent comprises a single material selected from the group consisting of citric acid, ethylenediaminetetraacetic acid (EDTA), oxalic acid, and gluconic acid, or a mixture of two or more thereof.

6. The method of claim 2, wherein a content ratio (parts by weight) of the metal precursor: the glycol-based solvent:
the chelating agent is in a range of 1:1:0.1 to 1:500:20.

7. The method of claim 2, wherein the performing of the primary heating is performed in a temperature range of 150°C to 300°C for 1 hour to 48 hours.

8. The method of claim 2, wherein the performing of the secondary heating is performed in a temperature range of 150°C to 300°C for 1 hour to 5 hours.

9. The method of claim 2, wherein the performing of the primary heating and the performing of the secondary heating are performed in an inert gas atmosphere including argon (Ar) .

10. The method of claim 1, wherein the lithium-containing transition metal oxide is selected from the group consisting of LiMO₂ (M=Co, Mn, Ni, Ni_{1/3}Co_{1/3}Mn_{1/3}, Cr, or V), LiMO₄ (M = CoMn, NiV, CoV, CoP, FeP, MnP, NiP, or Mn₂), Li(NiₐCo_{b}Mn_{c})O₂ (0<a<1, 0<b<1, 0<c<1, a+b+c=1), LiNi_{1-y}Co_{y}O₂, LiCo_{1-y}Mn_{y}O₂, LiNi_{1-y}Mn_{y}O₂ (O≤y≤1), Li(NiₐMn_{b}Co_{c})O₄ (0<a<2, 0<b<2, 0<c<2, a+b+c=2), LiMn_{2-z}Ni_{z}O₄, LiMn_{2-z}Co_{z}O₄ (O<z<2), and LiV₃O₆.

11. The method of claim 10, wherein the lithium-containing transition metal oxide is LiCoO₂, LiNiO₂, LiMnO₂, LiCuO₂, LiMn₂O₄, LiNi_{1/3}Mn_{1/3}Co_{1/3}O₂, LiNi_{0.6}Mn_{0.2}Co_{0.2}O₂, LiCoPO₄, or LiFePO₄.

12. The method of claim 1, wherein the drying is performed in a temperature range of 100°C to 200°C for 1 hour to 4 hours.

13. The method of claim 1, wherein the performing of the heat treatment is performed in a temperature range of 200°C to 1,200°C for 1 hour to 3 hours.

## Patentansprüche

1. Verfahren zur Herstellung eines aktiven Kathodenmaterials, welches eine Metall-Verbund-Oxid-Beschichtungsschicht umfasst, wobei das Verfahren die Schritte umfasst:
einen ersten Schritt zum Herstellen einer Metall-Glycolat-Lösung;
einen zweiten Schritt zum Mischen von Lithium-enthaltenden Übergangsmetalloxid-Partikeln und der Metall-Glycolat-Lösung und Rühren in einem pastösen Zustand;
einen dritten Schritt zum Trocknen der Mischung in pastösem Zustand; und
einen vierten Schritt zum Durchführen einer Wärmebehandlung der getrockneten Mischung,
wobei die Metall-Glycolat-Lösung ein einziges Material umfasst, ausgewählt aus der Gruppe bestehend aus Aluminiumglycolat, Zirkoniumglycolat, Titanglycolat, Calciumglycolat und Manganglycolat, oder eine Mischung von zwei oder mehreren davon, und
wobei die Metall-Verbund-Oxid-Beschichtungsschicht mindestens eine Verbindung umfasst, ausgewählt aus der Gruppe bestehend aus metallorganischen Verbindungen, welche durch die Chemischen Formeln 1 bis 3 dargestellt sind:
[Chemische Formel 1] M(C₂H₅O₂)ₙ
[Chemische Formel 2] M(C₆H₍₈₋ₙ₎O₇)
[Chemische Formel 3] M(C₆H₍₈₋ₙ₎O₇)(C₂H₅O₂)
(wobei M, als ein von einem Metall-Precursor losgelöstes Metall, mindestens ein Metall darstellt, ausgewählt aus der Gruppe bestehend aus Calcium (Ca), Titan (Ti), Zirkonium (Zr), Mangan (Mn) und Aluminium (Al), und n eine ganze Zahl zwischen 1 und 4 ist), wobei nach der Wärmebehandlung die Metall-Verbund Oxid-Beschichtungsschicht mindestens eine Verbindung umfasst, welche durch Wärmebehandlung von Materialien erhalten wird, ausgewählt aus der Gruppe bestehend aus metallorganischen Verbindungen, welche durch die Chemischen Formeln 1 bis 3 dargestellt sind.

2. Verfahren nach Anspruch 1, wobei der erste Schritt zum Herstellen einer Metall-Glycolat-Lösung umfasst:
Herstellen einer gemischten Lösung durch Dispergieren eines Metall-Precursors und eines Chelatisierungsmittles in einem Glycol-basierten Lösungsmittel;
Durchführen eines ersten Erwärmens der gemischten Lösung; und
Durchführen eines zweiten Erwärmens der gemischten Lösung, wobei eine Temperatur zum Durchführen des ersten Erwärmens der gemischten Lösung unterschiedlich ist von einer Temperatur zum Durchführen des zweiten Erwärmens der gemischten Lösung.

3. Verfahren nach Anspruch 2, wobei das Glycol-basierte Lösungsmittel ein einziges Material umfasst, ausgewählt aus der Gruppe bestehend aus Ethylenglycol, Propylenglycol, Diethylenglycol, Triethylenglycol und Polyethylenglycol, oder eine Mischung von zwei oder mehreren davon.

4. Verfahren nach Anspruch 2, wobei der Metall-Precursor ein einziges Material umfasst, ausgewählt aus der Gruppe bestehend aus Acetat, Hydroxid, Nitrat, Nitrid, Sulfat, Sulfid, Alkoxid und Halogenid, welche mindestens ein Metall enthalten, ausgewählt aus der Gruppe bestehend aus Calcium (Ca), Titan (Ti), Zirkonium (Zr), Mangan (Mn) und Aluminium (Al), oder eine Mischung von zwei oder mehreren davon.

5. Verfahren nach Anspruch 2, wobei das Chelatisierungsmittel ein einziges Material umfasst, ausgewählt aus der Gruppe bestehend aus Zitronensäure, Ethylendiamintetraessigsäure (EDTA), Oxalsäure und Gluconsäure, oder eine Mischung von zwei oder mehreren davon.

6. Verfahren nach Anspruch 2, wobei ein Anteilsverhältnis (Gewichtsteile) des Metall-Precursors: des Glycol-basierten Lösungsmittels: des Chelatisierungsmittels in einem Bereich von 1:1:0,1 bis 1:500:20 ist.

7. Verfahren nach Anspruch 2, wobei das Durchführen des ersten Erwärmens in einem Temperaturbereich von 150 °C bis 300 °C für 1 Stunde bis 48 Stunden durchgeführt wird.

8. Verfahren nach Anspruch 2, wobei das Durchführen des zweiten Erwärmens in einem Temperaturbereich von 150 °C bis 300 °C für 1 Stunde bis 5 Stunden durchgeführt wird.

9. Verfahren nach Anspruch 2, wobei das Durchführen des ersten Erwärmens und das Durchführen des zweiten Erwärmens in einer Inertgas-Atmosphäre durchgeführt wird, welche Argon (Ar) einschließt.

10. Verfahren nach Anspruch 1, wobei das Lithium enthaltende ÜbergangsmetallOxid aus der Gruppe ausgewählt wird, bestehend aus LiMO₂ (M = Co, Mn, Ni, Ni_{1/3}Co_{1/3}Mn_{1/3}, Cr oder V), LiMO₄ (M = CoMn, NiV, CoV, CoP, FeP, MnP, NiP oder Mn₂), Li(NiₐCo_{b}Mn_{c})O₂ (0<a<1, 0<b<1, 0<c<1, a+b+c=1), LiNi_{1-y}Co_{y}O₂, LiCo_{1-y}Mn_{y}O_{2,} LiNi_{1-y}Mn_{y}O₂ (0≤y≤1), Li(NiₐMn_{b}Co_{c})O₄ (0<a<2, o<b<2, 0<c<2, a+b+c = 2), LiMn_{2-z}Ni_{z}O₄, LiMn_{2-z}Co_{z}O₄ (0<z<2) und LiV₃O₆.

11. Verfahren nach Anspruch 10, wobei das Lithium enthaltende ÜbergangsmetallOxid LiCoO₂, NiNiO₂, LiMnO₂, LiCuO₂, LiMn₂O₄, LiNi_{1/3}Mn_{1/3}Co_{1/3}O₂, LiNi_{0,6}Mn_{0,2}Co_{0,2}O₂, LiCoPO₄ oder LiFePO₄ ist.

12. Verfahren nach Anspruch 1, wobei das Trocknen in einem Temperaturbereich von 100°C bis 200°C für 1 Stunde bis 4 Stunden durchgeführt wird.

13. Verfahren nach Anspruch 1, wobei das Durchführen der Wärmebehandlung in einem Temperaturbereich von 200 °C bis 1200 °C für 1 Stunde bis 3 Stunden durchgeführt wird.

## Revendications

1. Procédé de fabrication d'un matériau cathodique actif qui comprend une couche de revêtement d'un oxyde métallique composite, le procédé comprenant les étapes suivantes :
une première étape de préparation d'une solution d'un glycolate métallique ;
une deuxième étape de mélange de particules d'un oxyde d'un métal de transition contenant du lithium et de la solution d'un glycolate métallique et d'agitation jusqu'à un état pâteux ;
une troisième étape de séchage du mélange à l'état pâteux ; et
une quatrième étape de traitement thermique du mélange séché,
où la solution d'un glycolate métallique comprend un matériau unique sélectionné dans le groupe consistant en le glycolate d'aluminium, le glycolate de zirconium, le glycolate de titane, le glycolate de calcium et le glycolate de manganèse ou un mélange de deux ou plusieurs de ceux-ci et
où la couche de revêtement d'un oxyde métallique composite comprend au moins un composé sélectionné dans le groupe consistant en des composés organo-métalliques représentés par les Formules chimiques 1 à 3 :
[Formule chimique 1] M(C₂H₅O₂)ₙ
[Formule chimique 2] M(C₆H₍₈₋ₙ₎O₇)
[Formule chimique 3] M(C₅H₍₈₋ₙ₎O₇)(C₂H₅O₂)
(où M, en tant que métal désorbé à partir d'un précurseur métallique, représente au moins un métal sélectionné dans le groupe consistant en le calcium (Ca), le titane (Ti), le zirconium (Zr), le manganèse (Mn) et l'aluminium (Al) et n est un nombre entier entre 1 et 4), où, après le traitement thermique, la couche de revêtement d'un oxyde métallique composite comprend au moins un composé obtenu par traitement thermique de matériaux sélectionnés dans le groupe consistant en des composés organo-métalliques représentés par les Formules chimiques 1 à 3.

2. Procédé de la revendication 1, où la première étape de préparation d'une solution d'un glycolate métallique comprend : la préparation d'une solution mixte par dispersion d'un précurseur métallique et d'un agent chélatant dans un solvant à base d'un glycol ; la réalisation d'un chauffage primaire de la solution mixte ; et la réalisation d'un chauffage secondaire de la solution mixte, où la température de réalisation du chauffage primaire de la solution mixte est différente de la température de réalisation du chauffage secondaire de la solution mixte.

3. Procédé de la revendication 2, où le solvant à base d'un glycol comprend un matériau unique sélectionné dans le groupe consistant en l'éthylène glycol, le propylène glycol, le diéthylène glycol, le triéthylène glycol et le polyéthylène glycol ou un mélange de deux ou plusieurs de ceux-ci.

4. Procédé de la revendication 2, où le précurseur métallique comprend un matériau unique sélectionné dans le groupe consistant en un acétate, hydroxyde, nitrate, nitrure, sulfate, sulfure, alkoxyde et halogénure qui incluent au moins un métal sélectionné dans le groupe consistant en le calcium (Ca), le titane (Ti), le zirconium (Zr), le manganèse (Mn) et l'aluminium (Al) ou un mélange de deux ou plusieurs de ceux-ci.

5. Procédé de la revendication 2, où l'agent chélatant comprend un matériau unique sélectionné dans le groupe consistant en l'acide citrique, l'acide éthylène diamine tétraacétique (EDTA), l'acide oxalique et l'acide gluconique ou un mélange de deux ou plusieurs de ceux-ci.

6. Procédé de la revendication 2, où un rapport des teneurs (parties en poids) en précurseur métallique : solvant à base d'un glycol : agent chélatant est dans une plage qui va de 1 : 1 : 0,1 à 1 : 500 : 20.

7. Procédé de la revendication 2, où la réalisation du chauffage primaire est effectuée à une température dans la plage de 150 °C à 300 °C pendant 1 heure à 48 heures.

8. Procédé de la revendication 2, où la réalisation du chauffage secondaire est effectuée à une température dans la plage de 150 °C à 300 °C pendant 1 heure à 5 heures.

9. Procédé de la revendication 2, où la réalisation du chauffage primaire et la réalisation du chauffage secondaire sont effectuées dans une atmosphère gazeuse inerte, y compris sous argon (Ar).

10. Procédé de la revendication 1, où l'oxyde d'un métal de transition contenant du lithium est sélectionné dans le groupe consistant en les suivants : LiMO₂ (M=Co, Mn, Ni, Ni_{1/3}Co_{1/3}Mn_{1/3}, Cr ou V), LiMO₄ (M = CoMn, NiV, CoV, CoP, FeP, MnP, NiP ou Mn₂), Li(NiₐCo_{b}Mn_{c})O₂ (0<a<1, 0<b<1, 0<c<1, a+b+c=1), LiNi_{1-y}Co_{y}O₂, LiCo_{1-y}Mn_{y}O₂, LiNi_{1-y}Mn_{y}O₂ (0≤y≤1), Li(NiₐMn_{b}Co_{c})O₄ (0<a<2, 0<b<2, 0<c<2, a+b+c=2), LiMn_{2-z}Ni_{z}O₄, LiMn_{2-z}Co_{z}O₄ (0<z<2) et LiV₃O₆.

11. Procédé de la revendication 10, où l'oxyde d'un métal de transition contenant du lithium est sélectionné dans le groupe consistant en les suivants : LiCoO₂, LiNiO₂, LiMnO₂, LiCuO₂, LiMn₂O₄, LiNi_{1/3}Mn_{1/3}Co_{1/3}O₂, LiNi_{0,6}Mn_{0,2}Co_{0,2}O₂, LiCoPO₄ ou LiFePO₄.

12. Procédé de la revendication 1, où le séchage est effectué à une température dans une plage qui va de 100 °C à 200 °C pendant 1 heure à 4 heures.

13. Procédé de la revendication 1, où la réalisation du traitement thermique est effectuée à une température dans la plage de 200 °C à 1 200 °C pendant 1 heure à 3 heures.
